# EUROPEAN PATENT APPLICATION

(11) **EP 4 826 835 A1**
(43) Date of publication of application: **21.10.2026**
(21) Application number: 26156189.8
(22) Date of filing: 04.02.2026
(51) Int. Cl.: H01M 10/42, H01M 10/48, H01M 10/615

(54) **SYSTEM AND METHOD TO HEAT LITHIUM-ION BATTERY CELLS**

(30) Priority: 15.04.2025 US 202519179068
(71) Applicant: Schneider Electric IT Corporation, Foxboro, MA 02035 (US)
(72) Inventor: KUMAR RAGUPATHY, Naveen, BANGALORE (IN); KV, Sundaraaman, BANGALORE (IN)
(74) Representative: Lavoix

(57) **Abstract**

A battery cell interconnection and measurement system includes a busbar configured to electrically connect one or more battery cells, a heating element configured to thermally couple one or more battery cells to provide heating and thermal regulation, and an electronic substrate configured to couple sensors to the heating element. The sensors measure characteristics of the one or more battery cells. The battery cell interconnection and measurement system further includes a thermally conductive layer configured to provide mechanical stability to the heating element, the electronic substrate, and the busbar, and to form the battery cell interconnection and measurement system.

## Description

### BACKGROUND

### 1. Field of the Invention

The present disclosure relates to batteries, and more particularly to a system and method to preheat and/or heat lithium-ion battery cells.

### 2. Discussion of Related Art

Lithium-ion batteries are mainly used because of advantages, such as higher energy density, higher efficiency, long cycle life, and low self-discharge rate. However, at low temperatures, the performance of lithium-ion batteries deteriorates. Charging at low temperature will lead to lithium deposition, which may cause an internal short circuit leading to thermal runaway, fire and potential explosion. Also, the capacity and power of the battery may be reduced at low temperatures. Therefore, battery preheating and/or heating techniques can improve the performance and lifetime of lithium-ion batteries.

Two main factors may create performance degradation at low temperatures. Firstly, significant decrease of the solid phase diffusion coefficient, which causes a large concentration difference polarization and makes the battery terminal voltage reach the cut-off voltage rapidly, resulting in a sharp decrease of the available battery capacity. Secondly, increase in charge transfer resistance, indicating as lower electrochemical reaction rate, which means that the hysteretic electrochemical dynamics at low temperatures will lead to a sharp decline in battery performance at low temperatures. Also, the electrolyte may freeze and cause the discharge to fail at extremely low-temperature conditions.

### SUMMARY

One aspect of the present disclosure is directed to a battery cell interconnection and measurement system comprising a busbar configured to electrically connect one or more battery cells, a heating element configured to thermally couple one or more battery cells to provide heating and thermal regulation, and an electronic substrate configured to couple sensors to the heating element. The sensors measure characteristics of the one or more battery cells. The battery cell interconnection and measurement system further comprises a thermally conductive layer configured to provide mechanical stability to the heating element, the electronic substrate, and the busbar, and to form the battery cell interconnection and measurement system.

Embodiments of the battery cell interconnection and measurement system further may include configuring each battery cell of the one or more battery cells to include two terminals, a positive terminal and a negative terminal. The busbar and the heating element each may be configured to engage the terminals to heat an entire top surface of each battery cell of the one or more battery cells. The heating element may be coupled to at least one switch to provide selective heating to the one or more battery cells. The at least one switch may be configured to provide selective heating to multiple battery cells of the one or more battery cells in parallel or in series. The at least one switch may be coupled to a battery management system (BMS). The electronic substrate may embody a flexible printed circuit. The thermally conductive layer may be fabricated from one of polyethylene terephthalate (PET), polybutylene terephthalate (PBT), polyethylene naphthalate (PEN), or polytrimethylene terephthalate (PTT) material. Each battery cell of the one or more battery cells may include a lithium battery cell. The electronic substrate may be coupled to a battery management system (BMS).

Another aspect of the present disclosure is directed to a battery module comprising one or more battery cells, at least one end plate provided at one end of the one or more battery cells, a cover configured to cover the one or more battery cells, and the battery cell interconnection and measurement system.

Embodiments of the battery module further may include an insulation pad disposed between each battery cell of the one or more battery cells. The battery module further may include at least one insulation plate disposed between the cover and the one or more battery cells.

Yet another aspect of the present disclosure is directed to a method of preheating one or more battery cells of a battery. In one embodiment, the method comprises: electrically connecting one or more battery cells; thermally coupling a heating element to the one or more battery cells to provide heating and thermal regulation; and providing mechanical stability to the heating element and to form a battery cell interconnection and measurement system.

Embodiments of the method further may include configuring each battery cell of the one or more battery cells to include two terminals, a positive terminal and a negative terminal. A busbar may be provided to electrically connect one or more battery cells. The busbar and the heating element each may be configured to engage the terminals to heat an entire top surface of each battery cell of the one or more battery cells. The method further may include coupling the heating element to at least one switch to provide selective heating to the one or more battery cells. The at least one switch may be configured to provide selective heating to multiple battery cells of the one or more battery cells in parallel or in series. The at least one switch may be coupled to a battery management system (BMS). An electronic substrate may be provided to couple sensors to the heating element. The electronic substrate may embody a flexible printed circuit. A thermally conductive layer may provide mechanical stability to the heating element, the electronic substrate, and a busbar. The thermally conductive layer may be fabricated from one of polyethylene terephthalate (PET), polybutylene terephthalate (PBT), polyethylene naphthalate (PEN), or polytrimethylene terephthalate (PTT) material. Each battery cell of the one or more battery cells may include a lithium battery cell.

Another aspect of the present disclosure is directed to a non-transitory computer-readable medium storing thereon sequences of computer-executable instructions for controlling a battery cell interconnection and measurement system of a battery module, the sequences of computer-executable instructions including instructions that instruct at least one processor to: monitor a temperature of one or more battery cells of the battery module with a sensor provided in the battery cell interconnection and management system; and in the event the temperature is below a predetermined threshold temperature, activate a heating element of the battery cell interconnection and management system. The heating element is configured to thermally couple the one or more battery cells to provide thermal heating and regulation of the one or more battery cells.

### BRIEF DESCRIPTION OF THE DRAWINGS

Aspects and embodiments of the invention are described in detail below with reference to the accompanying drawings. It is to be appreciated that the drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a perspective view of a battery pack of an embodiment of the present disclosure;
FIG. 2 is an exploded perspective view of a battery module of the battery pack of an embodiment of the present disclosure;
FIG. 3 is a perspective view of a battery cell of the battery module;
FIG. 4 is a perspective view of the battery module;
FIG. 5 is a perspective view of the battery pack showing a cell interconnection and measurement system removed from battery cells of a battery cell module;
FIG. 6 is a front view of the cell interconnection and measurement system showing one embodiment of heaters controlled by switches from a battery management system (BMS);
FIG. 7 is a front view of the cell interconnection and measurement system showing another embodiment of heaters controlled by a switch from the BMS; and
FIG. 8 is a diagram of a method of controlling the cell interconnection and measurement system.

### DETAILED DESCRIPTION

The present disclosure is directed to a battery cell interconnection and measurement system including a busbar, a heating element, a printed circuit board (PCB), and a thermally conductive layer to efficiently transfer the heat from the heating element to battery cells. The heating element is controlled by a battery management system (BMS) to provide temperature regulation measured by temperature sensors on the PCB. As used herein, the PCB is sometimes referred to as an electronic substrate.

Aspects of the disclosure are directed to heating battery cells through the battery cell terminals, rather than through outer surfaces of the battery cells. Stated another way, the battery cells are heated in an axial direction, which has the least thermal resistance. This approach is effective in heating the battery cells, with a homogeneous temperature distribution and a reduced preheating time relative to conventional heating methods. This results in improved performance and life span of the battery cells, as well as minimizing the components used in the assembly/design, reducing complexity and space.

In one embodiment, heating of battery cells at their terminals is achieved by using busbars, which can be of any material, such as nickel, copper, aluminum or alloys thereof. Homogeneous temperature distribution in the battery cells is achieved so that the battery cells will get heated uniformly. The heating can be powered by the battery cells and/or by an external means, which can be powered by, for example, a charger, a battery stack, or other power sources. For example, heating elements can be connected to each battery cell and can be controlled through a switch from the battery management system (BMS). The reduced heating time is compared to conventional heating methods.

In some embodiments, a polyamide-/silicon/PTC-type or any type of heating element can be embedded into the cell interconnection and measurement system. For example, the heating element can be embedded to the cell interconnection and measurement system along with the busbar and other sensor and control elements, which can be connected to the BMS. In addition to heating the battery cells, the heating element can also be used as a thermal balancer to ensure uniform and optimized heating of the battery cells. The heating element can also be used as a voltage balancing network. The heating element can also be replaced or used in conjunction with a cooling element to heat/cool the battery cell through the terminals. Aspects disclosed herein are not limited to prismatic cells alone and can be used on cells/modules/battery packs of other form factors.

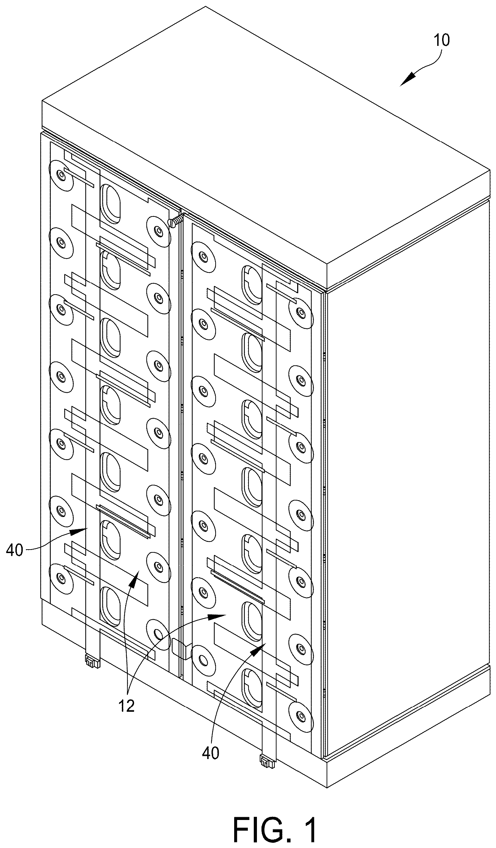

Referring now to the drawings, and more particularly to FIG. 1, a battery pack is generally indicated at 10. In one embodiment, the battery pack 10 includes two battery modules, each generally indicated at 12, which includes multiple battery cells. When assembled, each battery module 12 is a rectangular cuboid structure having a top end, a bottom end and four sides. As shown, a length and a width of the battery module 12 forming the ends of the battery module 12 are approximately square shaped, and a height forming the sides is approximately two times greater than the length or width. The size and shape of the battery pack 10 and the battery module 12 are not limited to the size and shape disclosed herein. Further, the battery pack 10 can be configured to include any number of battery modules 12, which may be connected in series or parallel, to achieve a desired voltage, capacity, and performance.

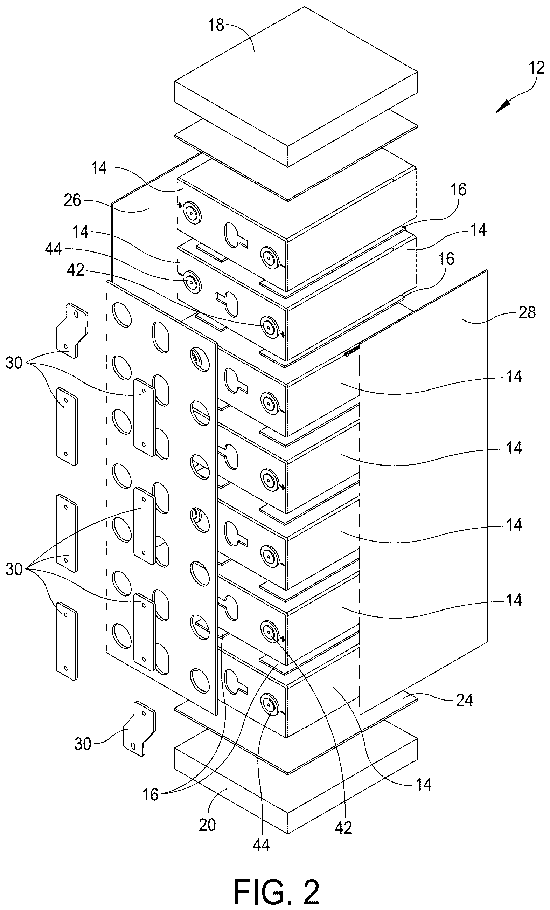

Referring to FIG. 2, which illustrates a single battery module 12 in an exploded perspective view, the battery module 12 includes seven battery cells, each indicated 14, which are shown in stacked relation. In one embodiment, the battery cells 14 may be lithium-ion batteries, which can be connected as described below in parallel or series connections. The type and/or chemistry and/or form factor of the battery cells 14 are not limited to the aspects mentioned with respect to this embodiment. As shown, battery cells 14 are disposed horizontally and stacked with one another so that terminals of the battery cells 14 are provided on one side of the battery module 12. It should be understood that the battery cells 14 can be disposed vertically with respect to one another. Although seven battery cells 14 are shown, the number of battery cells 14 of the battery module 12 can be varied depending on the intended use of the battery pack 10. As shown, insulation pads, each indicated at 16, are provided to isolate battery cells 14 from one another within the battery module 12. As shown, an insulation pad 16 is positioned between each adjacently stacked battery cell 14 to provide support and electrical isolation between adjacent battery cells 14. In one embodiment, two spaced apart insulation pads 16 are positioned between adjacent battery cells 14 to provide support. The insulation between the battery cells 14 is not limited to the aspects disclosed herein. Other types of insulation methods may be employed between the battery cells 14.

The battery module 12 further includes a top end plate 18 provided at a top of the battery module 12 and a bottom end plate 20 provided at a bottom of the battery module 12. In one embodiment, the end plates 18, 20 are fabricated from die cast aluminum. The end plates 18, 20 provide support to the battery module 12 when assembled. The size of the top end plate 18 and the bottom end plate 20, e.g., length and width, is approximate to the size of the battery cells 14. The top end plate 18 and the bottom end plate 20 are not limited to the aspects disclosed herein. Other types of structures and/or materials can be employed or not included. A top insulation plate 22 is disposed between the top of the battery module 12 and the top end plate 18 to electrically isolate the battery module 12 from the remaining components of the battery pack 10. Similarly, a bottom insulation plate 24 is disposed between the bottom of the battery module 12 and the bottom end plate 20 to further electrically isolate the battery module 12 from the remaining components of the battery pack 10. Side insulation plates 26, 28 are provided to cover sides of the battery module 12 to further electrically isolate the battery module 12.

The battery module 12 further includes several busbars, each indicated at 30, to provide electrical connection between adjacent battery cells 14 of the battery module 12. As shown, the busbars 30 are positioned on a side of the battery module 12 and connect terminals of the battery cells 14 to one another. The busbars 30 can be provided as a flat strip and fabricated from copper, brass or aluminum. The shape and size of the busbars 30 can be selected to ensure the effective transfer of power between the battery cells and to dissipate heat more efficiently. In one embodiment, the busbars 30 are fabricated from 1060 aluminum in an annealed condition. However, the busbar design and materials are not limited to aspects disclosed herein.

In one embodiment, the battery module 12 further may include two steel rings, a front steel ring and a back steel ring, which are provided to compress the battery module 12 and the end plates 18, 20 in the stacked arrangement. Each steel ring may be rectangular in construction and sized to fit a front and a back of the battery module 12, respectively, when assembled. In one embodiment, the steel rings may be fabricated from 201 stainless steel.

In one embodiment, a module cover may be provided to enclose the battery pack 10. The module cover may be configured to cover the front and side of the battery module 12. The module cover may be configured to enclose the components of the battery pack 10 to its final configuration. The end plates 18, 20 are provided to enclose the ends of the battery module 12.

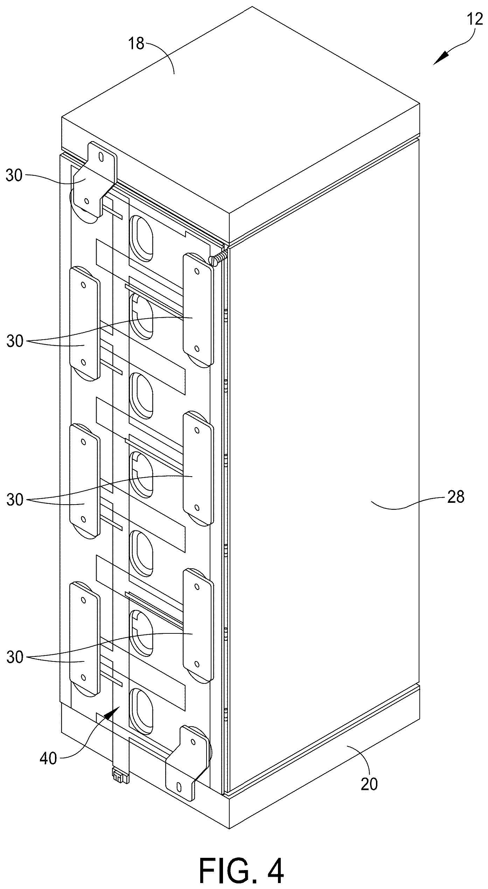

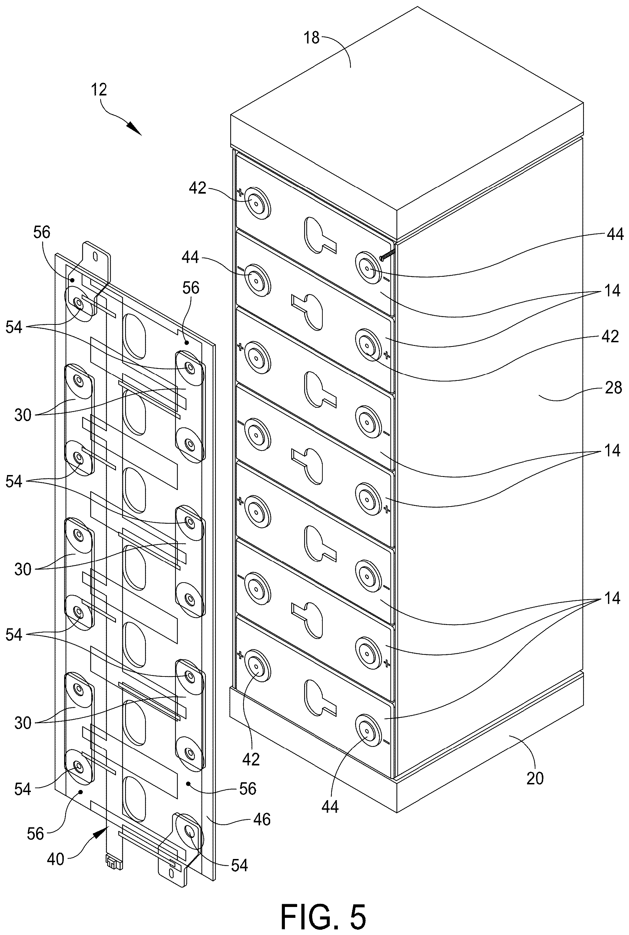

As will be described in greater detail below with reference to FIGS. 4 and 5, each battery pack module 12 further includes a battery cell interconnection and measurement system, generally indicated at 40, which is configured to provide contact between the battery cells 14 of the battery module 12 as well as other functions. As shown, the battery cell interconnection and measurement system 40 is provided on the front of the battery module 12 where the terminals of the battery cells 14 are exposed. The battery cell interconnection and measurement system 40 is sized to fit the front of the battery module 12 and extends in a generally vertical direction along a height of the battery module 12.

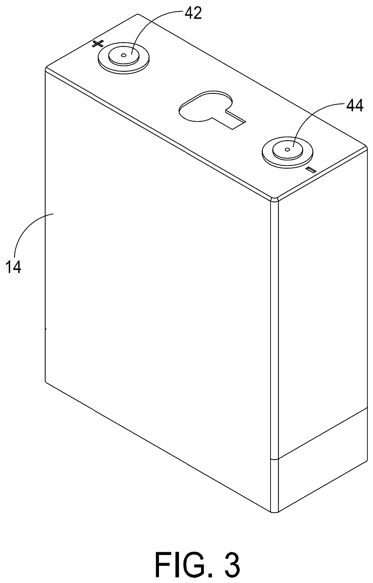

Referring to FIG. 3, one of the battery cells 14 is illustrated. As will be described in greater detail below, aspects of the present disclosure are directed to preheating and/or heating of the battery cells 14. Each battery cell 14 includes two terminals, a positive terminal 42 and a negative terminal 44. Preheating and/or heating is achieved by providing power to a heater that is embedded in the cell interconnection and measurement system through the terminals 42, 44 provided on the battery cells 14, rather than by applying heat to the outer surfaces of the battery cells 14. Heating is achieved in the battery cells 14 in an axial direction, which has the least thermal resistance.

Referring to FIGS. 4 and 5, each battery module 12 includes the battery cell interconnection and measurement system 40. As shown, the battery cell interconnection and measurement system 40 is provided on the front of the battery module 12, where the terminals 42, 44 of the battery cells 14 of the battery module 12 are presented. The battery cell interconnection and measurement system 40 includes an insulation sheet 46, such as a polyethylene terephthalate (PET) sheet, that extends a height of the battery module 12. Other materials, such as polybutylene terephthalate (PBT), polyethylene naphthalate (PEN), or polytrimethylene terephthalate (PTT), may be used. The insulation sheet 46 offers support for the components of the battery cell interconnection and measurement system 40. The battery cell interconnection and measurement system 40 further includes a printed circuit board 48, e.g., a flexible printed circuit board (FPC), which is applied, e.g., laminated, to the insulation sheet 46, which may be referred to as a polymeric sheet. The printed circuit board 48 is configured with traces to connect to the terminals 42, 44 of the battery cells 14 of the battery module 12 to sense parameters associated with the battery cells 14, such as voltage and temperature. The printed circuit board 48 further includes the busbars 30, which are part of the battery cell interconnection and measurement system 40 and aligned with the printed circuit board 48 at required positions and laminated with the insulation sheet 46.

In one embodiment, the battery cell interconnection and measurement system 40 further includes a film heating element 50 laminated to the polymeric sheet 46 to heat and/or preheat the battery cells 14 of the battery module 12. In the shown embodiment, the film heating element 50 is provided in the insulating sheet 46 or used as a standalone element. The heating element 50 includes contact areas, each indicated at 54, where the heating element 50 engages the positive terminals 42 and negative terminals 44 of the battery cells 14 and can also engage an entire top surface area to heat the battery cells 14. The heating element 50 includes seven contact areas 54 positioned along the length on one side thereof and seven contact areas 54 positioned along the length on an opposite side thereof.

The heating element 50 is connected to the battery management system (BMS) provided within the printed circuit board 48. In one embodiment, the busbars 30 are aligned with the printed circuit board 48 at required positions, and both the busbars 30 and the printed circuit board 48 are laminated to the insulation sheet 46. The heating element 50 is laminated to the insulation sheet 46 in the battery cell interconnection and measurement system 40 to preheat and/or heat the battery cells 14 of the battery module 12 when preheating and/or heating is required. This method of preheating and/or heating provides a uniform temperature distribution within the battery cells 14 of the battery module 12 and reduces the complexity of the design.

In some embodiments, the heating element 50 embodies a flexible heater, which includes a thin electrically resistive core laminated between layers of flexible insulation. The heating element 50 can be designed to a shape desired for use with the battery module 12. The design of the heating element 50 can be configured to generate more heat at desired locations along a length of the heating element 50. The resistive core of the heating element 50 may include one or more etched-foil heating elements, wire heating elements, or carbon-based PTC heating elements, not limited to aspects mentioned herein. The battery cell interconnection and measurement system 40 further may include sensors, indicated at 56, and other electrical components embedded in the printed circuit board 48 and/or the heating element 50. The flexible insulation may include silicone rubber, polyimide, PTFE, mica, or any other suitable material. In one embodiment, the sensors are provided as part of the BMS of the printed circuit board 48.

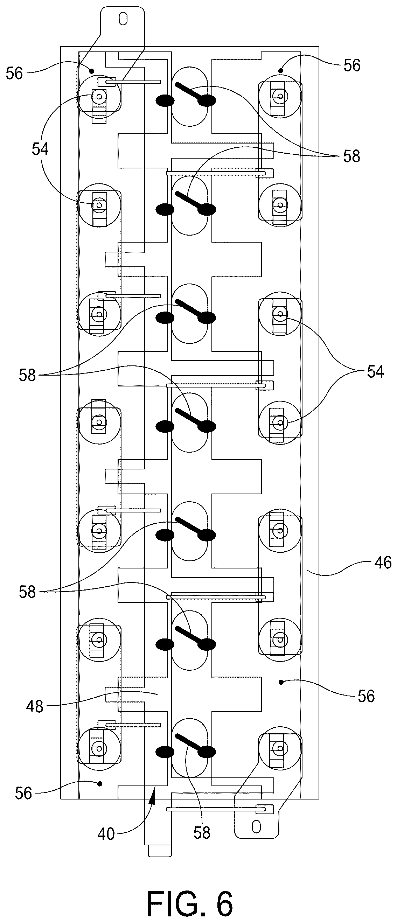

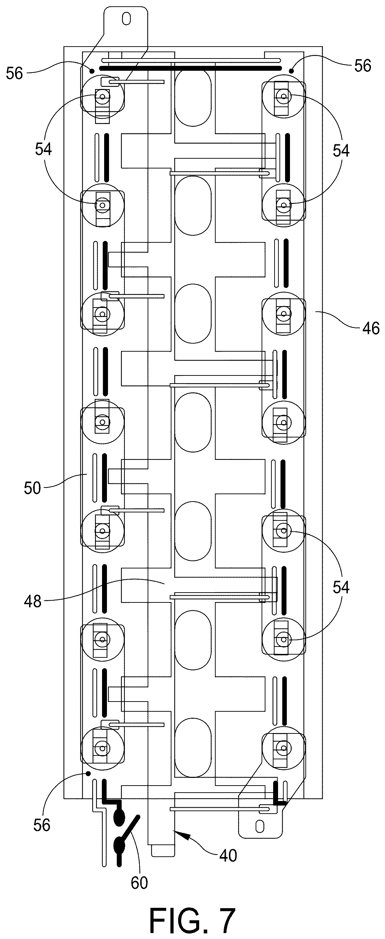

Referring to FIGS. 6 and 7, the heating element 50 is controlled by switches in the printed circuit board 48, which are controlled by the battery management system (BMS). In one embodiment shown in FIG. 6, switches, each indicated at 58, are located between the heating element 50 and between adjacent terminals 42, 44 of each battery cell 14 to control the heating of each battery cell 14. With this configuration, individual battery cells 14 can be selectively heated.

In another embodiment shown in FIG. 7, a switch 60 is provided to the heating element 50 in which the heating element 50 is turned "ON" to provide heat to the battery cells 14 of the battery module 12. This configuration provides a more simplified approach. With each option, the heating element 50 is controlled by switches 58 or 60.

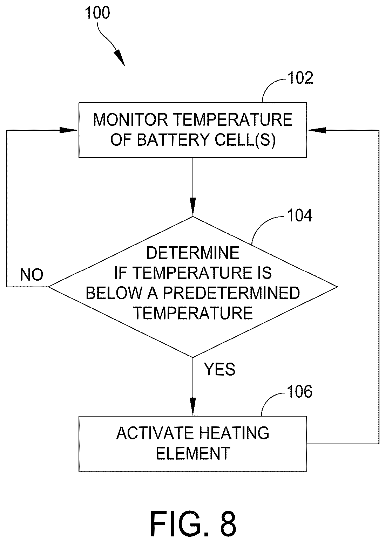

Referring to FIG. 8, a method of preheating and/or heating one or more battery cells 14 of the battery module 12 of the battery pack 10 is generally indicated at 100. As noted above, the battery cells 14 of the battery module 12 are electrically and mechanically coupled to one another by the battery cell interconnection and measurement system 40. Specifically, the battery cells 14 of the battery module 12 are connected to one another by busbars 30 and thermally coupled to one another by the heating element 50 of the battery cell interconnection and measurement system 40 to provide thermal regulation. The printed circuit board 48, including the BMS, provides operation management of the battery pack 10, including the battery cells 14 of the battery module 12. The insulation sheet 46 of the battery cell interconnection and measurement system 40 provides mechanical stability to the busbars 30, the heating elements 50, 52 and the printed circuit board 48.

In one embodiment, the method 100 includes monitoring the temperatures of the battery cells 14 of the battery module 12 at step 102. The BMS is configured to measure the temperature of each battery cell 14 of the battery module 12, as well as performing other monitoring functions, such as measuring and monitoring voltage and/or current. Next, at decision 104, it is determined if a temperature of one or more battery cells 14 of the battery module 12 is below a predetermined temperature. The BMS can be programmed to determine if one or more battery cells 14 is at a temperature below the predetermined temperature. For example, the predetermined temperature can be set at Tₘᵢₙ, e.g., 0 degrees Celsius. Next, at step 106, if the battery cell(s) 14 are below the predetermined temperature, the heating element 50 is activated by the BMS to preheat and/or heat the battery cells 14 of the battery module 12. Specifically, the switches 58 are operated to heat select battery cells 14 of the battery module 12 as shown in FIG. 6 or a single switch 60 is operated to heat all of the battery cells 14 of the battery module 12 as shown in FIG. 7. The number of switches that are required to operate the heater effectively and efficiently, and the number of battery cells 14 to be heated can be decided based on the design and application of the battery module 12. The monitoring of the temperature of the battery cell(s) 14 continue until it is determined that the temperature of the battery cell(s) 14 is above the predetermined temperature.

The temperature of the battery cell(s) 14 is continued to be monitored if the temperature of the battery cell(s) is above the predetermined temperature.

In some embodiments, preheating and/or heating of the battery cells 14 of the battery module 12 is achieved at their power terminals 42, 44, which is the lowest thermal resistance path.

In some embodiments, preheating and/or heating of the battery cells 14 of the battery module 12 is achieved at their power terminals 42, 44 through the busbars 30, which may be of any can be of any material, such as nickel, copper, aluminum, and other alloys.

In some embodiments, homogeneous temperature distribution in the battery cells 14 of the battery module 12 so that the battery cells 14 are uniformly heated.

In some embodiments, the heating element 50 can be powered by its own battery cells 14 of the battery cells and also by external means, which can be powered by, for example, a charger, a battery stack or other power sources.

In some embodiments, the heating element 50 is connected to each battery cell 14 of the battery module 12 and may be controlled through switches 58 or 60 from the BMS.

In some embodiments, the heating element 50 reduces preheating time relative to conventional heating methods.

In some embodiments, the heating element 50, which may be polyamide-/silicon-/PTC-type of heating element, is embedded in the battery cell interconnection and measurement system 40.

In some embodiments, the heating element 50 is embedded in the battery cell interconnection and measurement system 40 along with the busbars 30 and other sensor and control elements, which can be formed as part of the battery cell interconnection and measurement system 40.

In some embodiments, the heating element 50 is connected to preheat and/or heat the battery cells 14 of the battery module 12 as well as being used as a thermal balancer to enable uniform and optimized heating of the battery cells 14.

In some embodiments, the heating element 50 is connected to heat the battery cells 14 of the battery module 12 and to be used as a voltage balancing network.

In some embodiments, the heating element 50 can be replaced or used in conjunction with a cooling element to heat or cool the battery through the terminals.

In some embodiments, the battery cells 14 of the battery module 12 can be used on cells/modules/battery packs of other form factors.

Various controllers may execute various operations discussed above, including operations performed by the BMS of the printed circuit board 48. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

For the purposes of illustration only, and not to limit the generality, the present invention will now be described in detail with reference to the accompanying figures. This invention is not limited in its application to the details of construction and the arrangement of components set forth in the following description or illustrated in the drawings. The invention is capable of other embodiments and of being practiced or being carried out in various ways. Also, the phraseology and terminology used herein is for the purpose of description and should not be regarded as limiting. The use of "including," "comprising," "having," "containing" "involving," and variations thereof herein, is meant to encompass the items listed thereafter and equivalents thereof as well as additional items.

The present invention may also relate to the following embodiments:
Embodiment 1. A battery cell interconnection and measurement system, comprising:
   a busbar configured to electrically connect one or more battery cells;
   a heating element configured to thermally couple one or more battery cells to provide heating and thermal regulation;
   an electronic substrate configured to couple sensors to the heating element, the sensors measuring characteristics of the one or more battery cells; and
   a thermally conductive layer configured to provide mechanical stability to the heating element, the electronic substrate, and the busbar, and to form the battery cell interconnection and measurement system.
Embodiment 2. The battery cell interconnection and measurement system of embodiment 1, wherein each battery cell of the one or more battery cells includes two terminals, a positive terminal and a negative terminal.
Embodiment 3. The battery cell interconnection and measurement system of embodiment 2, wherein the busbar and the heating element are each configured to engage the terminals to heat an entire top surface of each battery cell of the one or more battery cells.
Embodiment 4. The battery cell interconnection and measurement system of embodiment 3, wherein the heating element is coupled to at least one switch to provide selective heating to the one or more battery cells.
Embodiment 5. The battery cell interconnection and measurement system of embodiment 4, wherein the at least one switch is configured to provide selective heating to multiple battery cells of the one or more battery cells in parallel or in series.
Embodiment 6. The battery cell interconnection and measurement system of embodiment 4, wherein the at least one switch is coupled to a battery management system (BMS).
Embodiment 7. The battery cell interconnection and measurement system of embodiment 1, wherein the electronic substrate embodies a flexible printed circuit.
Embodiment 8. The battery cell interconnection and measurement system of embodiment 1, wherein the thermally conductive layer is fabricated from one of polyethylene terephthalate (PET), polybutylene terephthalate (PBT), polyethylene naphthalate (PEN), or polytrimethylene terephthalate (PTT) material.
Embodiment 9. The battery cell interconnection and measurement system of embodiment 1, wherein each battery cell of the one or more battery cells includes a lithium battery cell.
Embodiment 10. The battery cell interconnection and measurement system of embodiment 1, wherein the electronic substrate is coupled to a battery management system (BMS).
Embodiment 11. A battery module, comprising:
   one or more battery cells;
   at least one end plate provided at one end of the one or more battery cells;
   a cover configured to cover the one or more battery cells; and
   the battery cell interconnection and measurement system of embodiment 1.
Embodiment 12. The battery module of embodiment 11, further comprising an insulation pad disposed between each battery cell of the one or more battery cells.
Embodiment 13. The battery module of embodiment 11, further comprising at least one insulation plate disposed between the cover and the one or more battery cells.
Embodiment 14. A method of preheating one or more battery cells of a battery, the method comprising:
   electrically connecting one or more battery cells;
   thermally coupling a heating element to the one or more battery cells to provide heating and thermal regulation; and
   providing mechanical stability to the heating element and to form a battery cell interconnection and measurement system.
Embodiment 15. The method of embodiment 14, wherein each battery cell of the one or more battery cells includes two terminals, a positive terminal and a negative terminal, and wherein a busbar is provided to electrically connect one or more battery cells.
Embodiment 16. The method of embodiment 15, wherein the busbar and the heating element are each configured to engage the terminals to heat an entire top surface of each battery cell of the one or more battery cells.
Embodiment 17. The method of embodiment 16, further comprising coupling the heating element to at least one switch to provide selective heating to the one or more battery cells.
Embodiment 18. The method of embodiment 17, wherein the at least one switch is configured to provide selective heating to multiple battery cells of the one or more battery cells in parallel or in series.
Embodiment 19. The method of embodiment 17, wherein the at least one switch is coupled to a battery management system (BMS).
Embodiment 20. The method of embodiment 14, wherein an electronic substrate is provided to couple sensors to the heating element.
Embodiment 21. The method of embodiment 20, wherein the electronic substrate embodies a flexible printed circuit.
Embodiment 22. The method of embodiment 14, wherein a thermally conductive layer provides mechanical stability to the heating element, the electronic substrate, and a busbar, the thermally conductive layer being fabricated from one of polyethylene terephthalate (PET), polybutylene terephthalate (PBT), polyethylene naphthalate (PEN), or polytrimethylene terephthalate (PTT) material.
Embodiment 23. The method of embodiment 14, wherein each battery cell of the one or more battery cells includes a lithium battery cell.
Embodiment 24. A non-transitory computer-readable medium storing thereon sequences of computer-executable instructions for controlling a battery cell interconnection and measurement system of a battery module, the sequences of computer-executable instructions including instructions that instruct at least one processor to:
   monitor a temperature of one or more battery cells of the battery module with a sensor provided in the battery cell interconnection and management system; and
   in the event the temperature is below a predetermined threshold temperature, activate a heating element of the battery cell interconnection and management system, the heating element being configured to thermally couple the one or more battery cells to provide thermal heating and regulation of the one or more battery cells.

Having thus described at least one embodiment of the present invention, various alternations, modifications and improvements will readily occur to those skilled in the art. Such alterations, modifications and improvements are intended to be within the scope and spirit of the invention. Accordingly, the foregoing description is by way of example only and is not intended to be limiting. The invention's limit is defined only in the following claims and equivalents thereto.

## Claims

1. A battery cell interconnection and measurement system, comprising:
a busbar configured to electrically connect one or more battery cells;
a heating element configured to thermally couple one or more battery cells to provide heating and thermal regulation;
an electronic substrate configured to couple sensors to the heating element, the sensors measuring characteristics of the one or more battery cells; and
a thermally conductive layer configured to provide mechanical stability to the heating element, the electronic substrate, and the busbar, and to form the battery cell interconnection and measurement system.

2. The battery cell interconnection and measurement system of claim 1, wherein each battery cell of the one or more battery cells includes two terminals, a positive terminal and a negative terminal.

3. The battery cell interconnection and measurement system of claim 2, wherein the busbar and the heating element are each configured to engage the terminals to heat an entire top surface of each battery cell of the one or more battery cells.

4. The battery cell interconnection and measurement system of claim 3, wherein the heating element is coupled to at least one switch to provide selective heating to the one or more battery cells, wherein in particular the at least one switch is configured to provide selective heating to multiple battery cells of the one or more battery cells in parallel or in series.

5. The battery cell interconnection and measurement system of claim 4, wherein the at least one switch is coupled to a battery management system (BMS).

6. The battery cell interconnection and measurement system of any one of the preceding claims, wherein the electronic substrate embodies a flexible printed circuit.

7. The battery cell interconnection and measurement system of any one of the preceding claims, wherein the thermally conductive layer is fabricated from one of polyethylene terephthalate (PET), polybutylene terephthalate (PBT), polyethylene naphthalate (PEN), or polytrimethylene terephthalate (PTT) material.

8. The battery cell interconnection and measurement system of any one of the preceding claims, wherein each battery cell of the one or more battery cells includes a lithium battery cell.

9. The battery cell interconnection and measurement system of any one of the preceding claims, wherein the electronic substrate is coupled to a battery management system (BMS).

10. A battery module, comprising:
one or more battery cells;
at least one end plate provided at one end of the one or more battery cells;
a cover configured to cover the one or more battery cells; and
the battery cell interconnection and measurement system of any one of the preceding claims.

11. The battery module of claim 10, further comprising an insulation pad disposed between each battery cell of the one or more battery cells and/or comprising at least one insulation plate disposed between the cover and the one or more battery cells.

12. A method of preheating one or more battery cells of a battery, the method comprising:
electrically connecting one or more battery cells;
thermally coupling a heating element to the one or more battery cells to provide heating and thermal regulation; and
providing mechanical stability to the heating element and to form a battery cell interconnection and measurement system.

13. The method of claim 12, wherein an electronic substrate is provided to couple sensors to the heating element.

14. The method of claim 12 or 13, wherein a thermally conductive layer provides mechanical stability to the heating element, the electronic substrate, and a busbar, the thermally conductive layer being fabricated from one of polyethylene terephthalate (PET), polybutylene terephthalate (PBT), polyethylene naphthalate (PEN), or polytrimethylene terephthalate (PTT) material.

15. A non-transitory computer-readable medium storing thereon sequences of computer-executable instructions for controlling a battery cell interconnection and measurement system of a battery module, the sequences of computer-executable instructions including instructions that instruct at least one processor to:
monitor a temperature of one or more battery cells of the battery module with a sensor provided in the battery cell interconnection and management system; and
in the event the temperature is below a predetermined threshold temperature, activate a heating element of the battery cell interconnection and management system, the heating element being configured to thermally couple the one or more battery cells to provide thermal heating and regulation of the one or more battery cells.
